# EUROPEAN PATENT SPECIFICATION

(11) **EP 1 813 473 B1**
(45) Date of publication and mention of the grant of the patent: **14.07.2010**
(21) Application number: 07100810.6
(22) Date of filing: 19.01.2007
(51) Int. Cl.: B60P 3/40

(54) **Method and apparatus for containing and/or transporting rotor blades**
Verfahren und Vorrichtung zum Aufnehmen und/oder Transportieren von Rotorblättern
Procédé et appareil pour contenir et/ou transporter des pales de rotor

(30) Priority: 31.01.2006 US 343885
(43) Date of publication of application: 01.08.2007
(73) Proprietor: GENERAL ELECTRIC COMPANY, Schenectady, NY 12345 (US)
(72) Inventor: Kootstra, Dirk-Jan, 6641 XR Bueningen GLD (NL); Rixten, Andre, 9988 RL Usquert (Gr) (NL)
(74) Representative: Bedford, Grant Richard

(56) References cited:
- WO-A-03/057528
- WO-A-2005/005286
- WO-A-2005/005822
- WO-A-2005/071261
- WO-A-2006/000230
- DE-A1- 3 416 375
- JP-A- 2002 059 776
- US-A1- 2005 220 558

## Description

This invention relates generally to transportation containers, and more specifically to methods and apparatus for containing and/or transporting rotor blades.

Some known rotor blades, such as, but not limited to, wind turbine rotor blades used to generate electrical power from wind, can be rather large (e.g., some exceeding 160 feet in length and 12 feet in width). Because of their size and/or fragility, some known large rotor blades may be damaged during transportation from where the rotor blades are manufactured to where the rotor blades are used. For example, some known rotor blades may be damaged during loading into and/or unloading from at least some known transportation containers. Such damage may degrade performance of the blade.

Rotor blades may come in a variety of different sizes and shapes. Accordingly, at least some known transportation containers are sized to fit the largest blade, which may increase a weight and overall size of transporting smaller blades. An alternative to using containers uniformly sized to the largest blade is to provide different containers for differently sized blades. However, providing different containers may increase a cost and/or difficulty of transporting rotor blades, for example because of possible logistical difficulties of providing that containers of the proper size are available for each shipment and/or additional manufacturing and/or design processes.

At least some known rotor blade transportation containers may be transported using more than one different mode of transportation, for example by ship, truck, and/or rail. However, some modes of transportation may have restrictions on large loads, for example height and/or width limits thereof. For example, when transporting large loads over land, the container height may sometimes be limited to about 4.0 meters, or about 12 feet. Height and/or width limits may facilitate ensuring containers clear bridges, overpasses, and/or other obstructions located on overland transportation routes. However, such limits may increase a difficulty of transporting more than one rotor blade in a single container, which may increase a cost of transporting some known rotor blades and/or increase an impractability of transporting more than one blade in a single container.

WO 2006/000230 discusses a method for the transport of a long windmill wing and a vehicle for the transport thereof.

In one aspect according to the present invention, a fixture is provided for at least one of supporting and transporting at least two rotor blades, as defined in appended claim 1.

Various aspects and embodiments of the present invention will now be described in connection with the accompanying drawings, in which:
Figure 1 is a perspective view of an exemplary wind turbine.
Figure 2 is a partially exploded perspective view of an exemplary embodiment of a fixture for supporting and/or transporting a wind turbine rotor blade.
Figure 3 is an unexploded side view of the fixture shown in Figure 2.
Figure 4 is a perspective view of a portion of the fixture shown in Figure 2.
Figure 5 is a side view of the fixture portion shown in Figure 4.
Figure 6 is a side view of an exemplary embodiment of a fixture assembly including two wind turbine rotor blades supported by two of the fixtures shown in Figures 2-5.
Figure 7 is a perspective view of a portion of the fixture assembly shown in Figure 6.
Figure 8 is a perspective view of another portion of the fixture assembly shown in Figure 6.

As used herein, the term "blade" is intended to be representative of any device that provides reactive force when in motion relative to a surrounding fluid. As used herein, the term "wind turbine" is intended to be representative of any device that generates rotational energy from wind energy, and more specifically, converts kinetic energy of wind into mechanical energy. As used herein, the term "wind generator" is intended to be representative of any wind turbine that generates electrical power from rotational energy generated from wind energy, and more specifically, converts mechanical energy converted from kinetic energy of wind to electrical power. As used herein, the term "windmill" is intended to be representative of any wind turbine that uses rotational energy generated from wind energy, and more specifically mechanical energy converted from kinetic energy of wind, for a predetermined purpose other than generating electrical power, such as, but not limited to, pumping a fluid and/or grinding a substance.

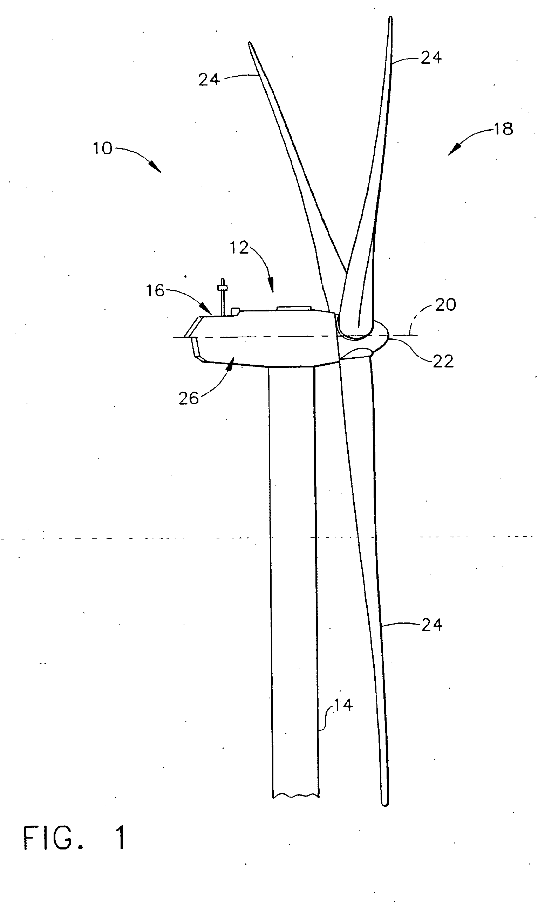

Figure 1 is a perspective of an exemplary embodiment of an exemplary wind turbine 10. Wind turbine 10 described and illustrated herein includes a wind generator 12 for generating electrical power from wind energy. However, in some embodiments, wind turbine 10 may include, in addition or alternative to wind generator 12, any type of wind turbine, such as, but not limited to, a windmill (not shown). Moreover, wind turbine 10 described and illustrated herein includes a horizontal-axis configuration. However, in some embodiments, wind turbine 10 may include, in addition or alternative to the horizontal-axis configuration, a vertical-axis configuration (not shown). Wind turbine 10 may be coupled to a power grid (not shown) for receiving electrical power therefrom to drive operation of wind turbine 10 and/or its associated components and/or for supplying electrical power generated by wind turbine 10 thereto. Although only one wind turbine 10 is shown in Figure 1, in some embodiments a plurality of wind turbines 10 may be grouped together, sometimes referred to as a "wind farm".

In some embodiments, wind generator 12 is mounted on a tower 14, however, in some embodiments wind turbine 10 includes, in addition or alternative to tower-mounted wind generator 12, a wind generator (and/or other type of wind turbine) adjacent the ground and/or a surface of water. The height of tower 14 may be selected based upon factors and conditions known in the art. Wind generator 12 includes a body 16, sometimes referred to as a "nacelle", and a rotor (generally designated by 18) coupled to body 16 for rotation with respect to body 16 about an axis of rotation 20. Rotor 18 includes a hub 22 and a plurality of blades 24 (sometimes referred to as "airfoils") extending radially outwardly from hub 22 for converting wind energy into rotational energy. Although rotor 18 is described and illustrated herein as having three blades 24, rotor 18 may have any number of blades 24. Blades 24 may each have any length and/or width (whether described herein). For example, in some embodiments one or more rotor blades 24 are about 0.5 meters long, while in some embodiments one or more rotor blades 24 are about 50 meters long. Other examples of blade 24 lengths include 10 meters or less, about 20 meters, about 34 meters, about 37 meters, and about 40 meters. Examples of blade widths include between about 0.5 meters and about 10 meters.

Despite how rotor blades 24 are illustrated in Figure 1, rotor 18 may have blades 24 of any shape, and may have blades 24 of any type and/or any configuration, whether such shape, type, and/or configuration is described and/or illustrated herein. One example of another type, shape, and/or configuration of rotor blades 24 is a ducted rotor (not shown) having a turbine (not shown) contained within a duct (not shown). Another example of another type, shape, and/or configuration of rotor blades 24 is a darrieus wind turbine, sometimes referred to as an "eggbeater" turbine. Yet another example of another type, shape, and/or configuration of rotor blades 24 is a savonious wind turbine. Even another example of another type, shape, and/or configuration of rotor blades 24 is a traditional windmill for pumping water, such as, but not limited to, four-bladed rotors having wooden shutters and/or fabric sails. Moreover, wind turbine 10 may, in some embodiments, be a wind turbine wherein rotor 18 generally faces upwind to harness wind energy, and/or may be a wind turbine wherein rotor 18 generally faces downwind to harness energy. Of course, in any embodiments, rotor 18 may not face exactly upwind and/or downwind, but may face generally at any angle (which may be variable) with respect to a direction of the wind to harness energy therefrom.

Wind generator 12 includes an electrical generator 26 coupled to rotor 18 for generating electrical power from the rotational energy generated by rotor 18. Generator 26 may be any suitable type of electrical generator, such as, but not limited to, a wound rotor induction generator. General operation of the electrical generator to generate electrical power from the rotational energy of rotor 18 is known in the art and therefore will not be described in more detail herein. In some embodiments, wind turbine 10 may include one or more control systems (not shown), actuating mechanisms, and/or sensors (not shown) coupled to some or all of the components of wind generator 12 for generally controlling operation of wind generator 12 and/or as some or all of the components thereof (whether such components are described and/or illustrated herein). For example, control system(s), actuating mechanism(s), and/or sensor(s) may be used for, but are not limited to, overall system monitoring and control including, for example, pitch and speed regulation, high-speed shaft and yaw brake application, yaw and pump motor application, and/or fault monitoring. Alternative distributed or centralized control architectures may be used in some embodiments. General operation of wind turbine 10, and more specifically wind generator 12, is known in the art and therefore will not be described in more detail herein.

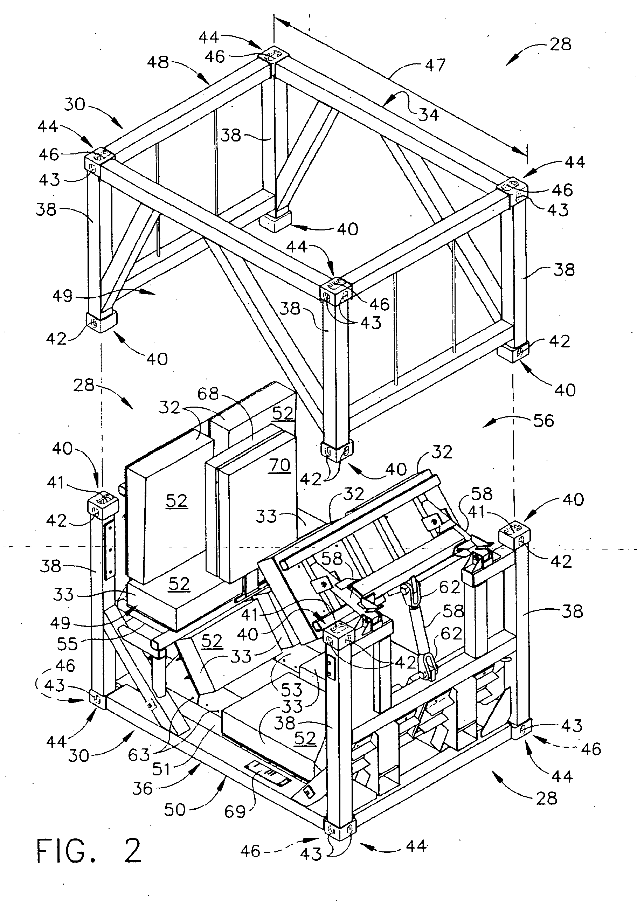

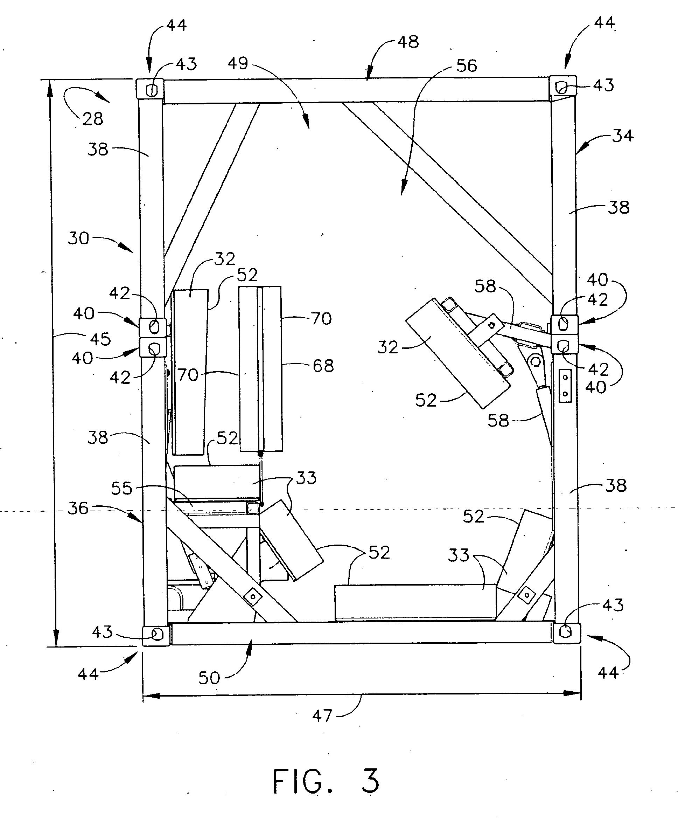

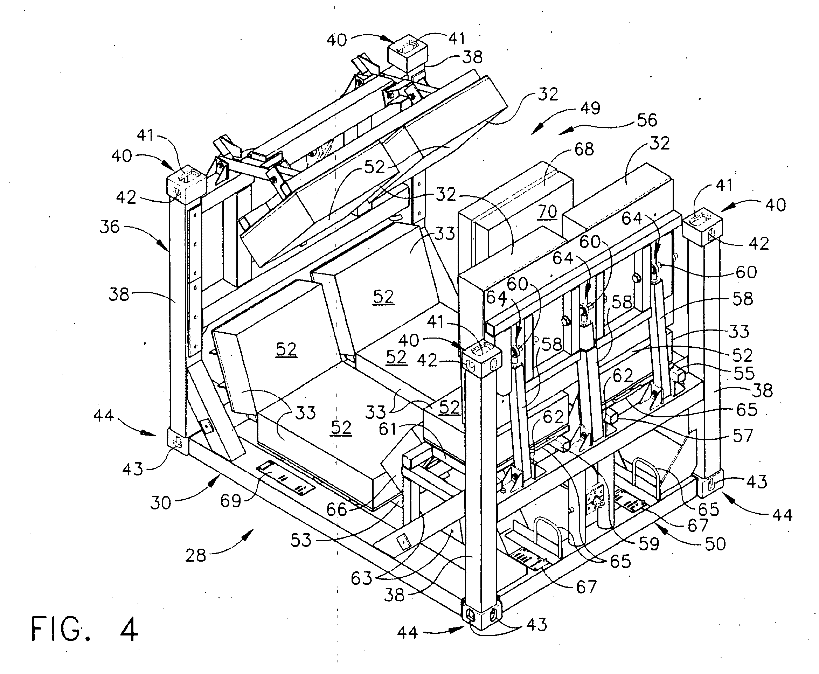

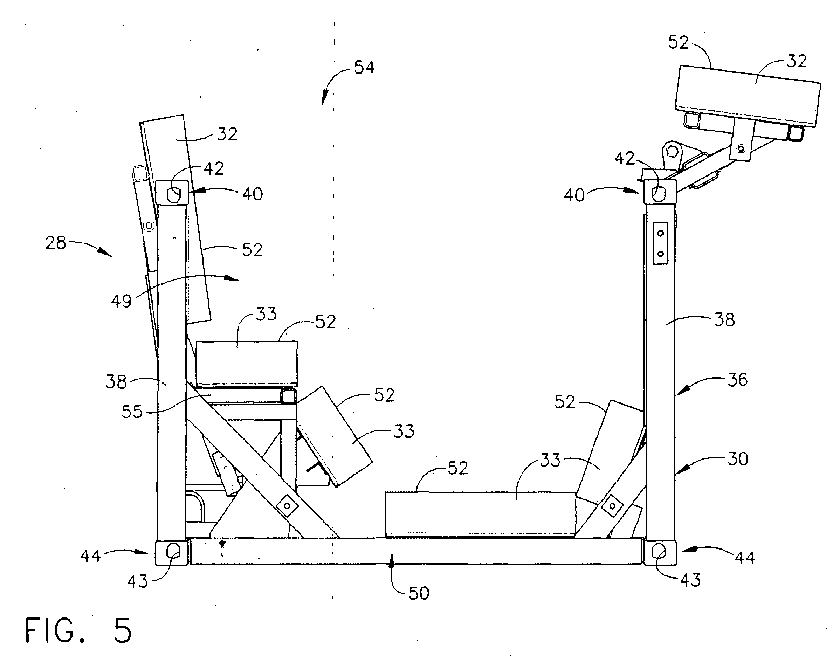

Figure 2 is a partially exploded perspective view of an exemplary embodiment of a fixture 28 for supporting and/or transporting one or more of wind turbine rotor blades 24 (shown in Figure 1). Figure 3 is an unexploded side view of fixture 28. Figure 4 is a perspective view of a portion of fixture 28. Figure 5 is a side view of the portion of fixture 28 shown in Figure 4. Fixture 28 includes a frame 30 and a plurality of cushions 32 and 33 coupled to frame 30. Generally, fixture 28 supports at least a portion of one or more wind turbine rotor blades 24 for, for example, storage and/or transportation by any suitable means and/or method, such as, but not limited to, truck, ship, and/or rail. Generally, cushions 32 and 33 support and/or contain a portion of one or more blades 24 and may facilitate reducing or eliminating vibrational stresses and/or other forces induced into blades 24, for example during transportation, loading into fixture 28, and/or unloading from fixture 28.

Frame 30 includes an upper section 34 and a lower section 36. In some embodiments, upper section 34 may not used such that frame 30 only includes lower section 36. For example, in some embodiments upper section 34 is not used when transporting one or more blade(s) 24 over land, although use of only lower section 36 is not limited thereto. In other embodiments upper section 34 is used when transporting blade(s) 24 over land. Upper and lower section 34 and 36 may be coupled together in any suitable manner, fashion, arrangement, configuration, orientation, and/or by any suitable structure and/or means. In the exemplary embodiment, and for example, upper and lower sections 34 and 36 each include a plurality of legs 38, an end portion 40 of which couples to a corresponding leg end portion 40 of the other section 34 or 36, as shown in Figures 2 and 3. Moreover, and for example, in the exemplary embodiment legs 38 interconnect with using fasteners (not shown) and a plurality of openings 42 within leg end portions 40. In some embodiments, to facilitate alignment and/or intercoupling of upper and lower sections 34 and 36, one or more of leg end portions 40 may include an opening 41 and/or an extension (not shown) for interconnection with an opening 41 and/or an extension of a corresponding leg 38 on the other section 34 or 36. Moreover, in some embodiments, to facilitate stacking two fixtures 28, one or more end portions 44 of legs 38 that are opposite leg end portions 40 may include an opening 46 and/or an extension (not shown) for interconnection with an opening 46 and/or extension of a corresponding leg 38 on a section 34 or 36 of another fixture 28 (not shown in Figures 2-5). Furthermore, in some embodiments, to facilitate stacking two fixtures 28, one or more leg end portions 44 may include an opening 43 to facilitate coupling fixture 28 to another fixture 28, although two fixtures 28 may be coupled together using any suitable structure and/or means. Although upper and lower sections 34 and 36 are each illustrated with four legs 38, sections 34 and 36 may each include any number of legs 38.

Although frame 30 may have any size and/or shape, in some embodiments frame 30 is sized and/or shaped to comply with restrictions on predetermined sized and/or shaped loads. Such restrictions on predetermined sized and/or shaped loads may include, but are not limited to, regional restriction, national restrictions, international restrictions, restrictions of transportation over land, restrictions of transportation over water, and/or restrictions of air transportation. For example, some known transport regulation within the United States restrict loads to a width of about 2.591 meters and a height of about 4.42 meters, some known Canadian transport regulations restrict loads to a width of about 2.599 meters and a height of about 4.312 meters, some known European transport regulations restrict loads to a width of between about 2.5 and about 2.9 meters and a height of between about 4 and about 4.5 meters, and some transport regulations within Asia restrict loads to a width of between about 2.4 meters and about 3.2 meters, and a height of about 4.1 meters. Accordingly, in some embodiments frame 30 has a maximum height 45 of, but is not limited to having a maximum height 45 of, between about 2 meters and about 5 meters. For example, in some embodiments frame 30 has a height 45 of about 3.45 meters. Moreover, in some embodiments frame 30 has a maximum width 47 of, but is not limited to having a maximum width 47 of, between about 1.5 meters and about 3.5 meters. For example, in some embodiments frame 30 has a width 47 of about 2.591 meters.

When upper and lower sections 34 and 36 are coupled together, a space 49 is generally defined between legs 38, a top portion 48 of upper section 34, and a bottom portion 50 of lower section 36. Space 49 receives a portion of blades 24. Cushions 32 and 33 extend into space 49 for engaging the blade portions and thereby facilitate containing and/or supporting blades 24 within space 49. Although cushions 32 and 33 are illustrated as coupled to frame lower section 36, in some embodiments upper section 34 may include one or more cushions 32 and/or 33 coupled thereto, lower section 36 may not include any cushions 32 and/or 33 coupled thereto, and/or one or more cushions 32 and/or 33 are coupled to both upper and lower sections 34 and 36.

Cushions 32 and 33 may each include any suitable material that enables cushions 32 and 33 to function as described herein. In some embodiments, and for example, cushions 32 and/or 33 include compressed natural fibers with latex, which are at least partially covered with a rubber sheet. In embodiments wherein cushions 32 and/or 33 include natural fibers, cushions 32 and 33 may each include any suitable natural fiber that enables cushions 32 and 33 to function as described herein, such as, but not limited to coconut fibers. Moreover, in embodiments wherein cushions 32 and/or 33 are at least partially covered with a rubber sheet, cushions 32 and 33 may each be at least partially covered by, but are not limited to being covered by, ethylene propylene diene monomer (EPDM) rubber. In other embodiments, and for example, cushions 32 and/or 33 each include polyurethane. Cushions 32 and 33 may each include any suitable density that allows cushions 32 and 33 to function as described herein. In some embodiments, and for example, cushions 32 and 33 each include a density of between about 150 kg/m³ and about 250 kg/m³. For example, in some embodiments cushions 32 and 33 each have a density about 175 kg/m³. Moreover, and for example, in some embodiments cushions 32 and 33 each have a density about 200 kg/m³. In some embodiments, cushions 32 and 33 include a material(s), such as, but not limited to, memory foam, that at least partially retains a shape memory such that cushions 32 and 33 at least partially return to their original shape after compression, for example after one or more blades 24 are removed from fixture after transportation and/or storage thereof.

In some embodiments, cushions 32 and 33 facilitate reducing or eliminating vibrational stresses and/or other forces induced into one or more blades 24, for example during transportation, loading into fixture 28, and/or unloading from fixture 28. Accordingly, cushions 32 and 33 may facilitate reducing or eliminating damage to blades 24, for example during transportation, loading into fixture 28, and/or unloading from fixture 28. For example, and although cushions 32 and 33 may facilitate reducing or eliminating damage to blades 24 from other force values exerted on blades 24, in some embodiments cushions 32 and 33 facilitate reducing or eliminating damage to blades 24 from forces exerted on blades 24, for example during transportation, of up to about 4 G.

In some embodiments one or more cushions 32 and 33 facilitate a secure coupling between one or more blades 24 and fixture 28, to facilitate retaining blades 24 within fixture 28 and in position, such as, but not limited to, a location and/or an orientation, relative to cushions 32 and 33 and fixture 28. For example, in some embodiments a surface 52 of one or more cushions 32 and/or 33, for example a surface of a rubber sheet of a cushion 32 and/or 33, facilitates increasing an amount of friction and/or stiction between surface 52 and a surface (not shown) of a blade 24 that is engaged by surface 52, to facilitate a secure coupling between the blade 24 and fixture 28. In some embodiments, the stiction and/or friction provided by cushions 32 and/or 33 is sufficient to retain one or more blades 24 within fixture 28 and in position relative to cushions 32 and 33 and fixture 28 during transportation and/or storage of the blade(s) 24. Surface 52 may be configured to facilitate increasing friction and/or stiction using any suitable structure and/or means, such as, but not limited to, a texture that facilitates increasing friction and/or stiction. Surface 52 may include any texture(s) and/or material(s) that enable cushions 32 and/or 33 to facilitate retaining blades 24 within fixture 28 and in position relative to cushions 32 and 33 and fixture 28. For example, in some embodiments surface 52 of one or more cushions 32 and/or 33 is at least partially defined by (EPDM) rubber to facilitate retaining blades 24 within fixture 28 and in position relative to cushions 32 and 33 and fixture 28.

Cushions 32 and 33 are each selectively positionable in two or more positions. As such, a position, such as, but not limited to, a location and/or an orientation, of each cushion 32 and 33 with respect to frame 30, and therefore with respect to a portion of one or more blades 24 received within space 49, can be adjusted. Such adjustment may facilitate loading blades 24 into fixture 28, unloading blades from fixture 28, and/or selectively positioning cushions 32 and 33 to support differently sized and/or shaped blades 24 using fixture 28. For example, each cushion 32 and 33 is positionable with respect to one another and frame 30 such that a collective general shape of the arrangement of cushion surfaces 52 can be adjusted to accommodate a particular size and/or shaped blade portion, such that cushions 32 and 33 are adjustable to receive differently sized and/or shaped blades 24.

Cushions 32 are each movably coupled to frame 30 for movement with respect to frame 30 between a position 54, shown in Figure 5, that facilitates loading a blade 24 into frame space 49, a position 56, shown in Figure 2-4, wherein cushion surfaces 52 are positioned to engage one or more blades 24 having a predetermined size and/or shape to contain and/or support the blade(s)24, and another position (not shown) wherein surfaces 52 are positioned to engage one or more blades 24 having another different predetermined size and/or shape to contain and/or support the blade(s)24.

Cushions 32 may be configured for any suitable type, direction, and/or amount of movement with respect to frame 30, each other, members 58 (described below), any other component of fixture 30, and/or blades 24 that enables cushions 32 to function as described herein. Moreover, cushions 32 may include any structure and/or means, that enable cushions 32 to move as described and/or illustrated herein. For example, in the exemplary embodiment cushions 32 are each coupled to one or more members 58 extending from frame 30. Members 58 are hingedly coupled to frame 30 such that cushions 32 are rotatably coupled to frame for rotation with respect to frame 30. Cushions 32 are also hingedly coupled to members 58 such that cushions 32 are rotatably coupled to members 58 for rotation with respect to members 58. Members 58 may be hingedly coupled to frame 30, and cushions 32 may be hingedly coupled to members 58, using any suitable structure and/or means, such as in the exemplary embodiment, but not limited to, rod ends 60 and/or u-joints 62. In some embodiments, one or more of members 58 is configured to telescope to facilitate movement of cushions 32. Cushions 32 may each be locked into one or more predetermined positions using any suitable method, process, structure, and/or means. For example, in the exemplary embodiment cushions 32 are locked into position (e.g., position 54 shown in Figure 5 and/or position 56 shown in Figure 2-4) by tightening u-joints 62 and/or joints 64 that include rod ends 60. In some embodiments, a plurality of fasteners used to lock cushions 32 into position may each be sized generally the same such that each cushion 32 can be locked into position using the same tool (not shown), such as, but not limited to, a wrench.

Cushions 33 may include any structure and/or means that enable cushions 33 to be selectively positionable in two or more positions as described and/or illustrated herein. For example, in the exemplary embodiment each cushion 33 is each selectively positionable in two or more positions (only one position for each cushion 33 is illustrated herein) by sliding cushions 33 along one or more corresponding members 51, 53, 55, 57, 59, and 61 of fixture frame 30. Cushions 33 may each be locked into one or more predetermined positions using any suitable method, process, structure, and/or means. For example, in the exemplary embodiment frame members 51, 53, 55, 57, 59, and 61 each include a plurality of openings 63 for receiving a locking pin (not shown) to lock cushions 33 into position along the corresponding frame member(s) 51, 53, 55, 57, 59, and 61. In some embodiments, one or more of cushions 33 includes a handle 65 for moving cushions 33 along the corresponding frame member(s) 51, 53, 55, 57, 59, and 61. Moreover, in some embodiments frame 30 and/or cushions 33 include indicia indicating positions for particular blade types. For example, in the exemplary embodiment frame members 51 and 53 each include an identification plate 67 indicating positions for particular blade types.

In some embodiments, fixture 28 includes a plurality of cushions (not shown), coupled to frame 30 in any suitable manner, fashion, arrangement, location, orientation, configuration, and/or by any suitable structure and/or means, that can generally only be positioned in one position relative to frame 30. For example, in some alternative embodiments one or more of cushions 32 and/or cushions 33 can generally only be coupled to frame 30 in one position and are non-movable relative to frame 30 once coupled thereto. Fixture 28 may include any number of cushions that are can generally only be positioned in one position. In some embodiments, fixture 28 does not include any cushions that can only be positioned in one position.

In the exemplary embodiment, fixture 28 includes a partition 68 for use separating two different blades 24 received within frame space 49. In the exemplary embodiment, partition 68 is cushioned as described herein with respect to cushions 32 and 33. Accordingly, in some embodiments partition 68 facilitates reducing or eliminating vibrational stresses and/or other forces induced into blades 24, for example during transportation, loading into fixture 28, and/or unloading from fixture 28. However, in some embodiments partition 68 is not cushioned. In some embodiments, a surface 70 of one or more partitions 68 includes a texture that facilitates increasing an amount of friction an/or stiction between surface 70 and a surface (not shown) of a blade 24 that is engaged by surface 70 to facilitate a secure coupling between blades 24 and fixture 28, for example, to facilitate retaining blades 24 within fixture 28 and in position relative to cushions 32 and 33 and fixture 28.

In some embodiments, partition 68 is coupleable to frame 30 in two or more different positions (only one position for partition 68 is illustrated herein), such as, but not limited to, orientations and/or locations, to facilitate loading blades 24 into fixture 28, unloading blades from fixture 28, and/or supporting differently sized and/or shaped blades 24 using fixture 28. For example, in some embodiments partition 68 is movably coupled to frame 30 for movement with respect to frame 30, for example movement as described herein with respect to cushions 32. However, in the exemplary embodiment partition 68 is generally coupled to frame 30 such that partition 68 can generally only be coupled to frame in one position. Partition 68 may be coupled or fixedly secured to frame 30 in any suitable manner, fashion, arrangement, location, orientation, configuration, and/or by any suitable structure and/or means that enables partition 68 to function as described and/or illustrated herein. Although one partition 68 is illustrated, fixture 28 may include any number of partitions 68. In some embodiments, fixture 28 does not include a partition 68. Moreover, in some embodiments (whether partition is coupleable to frame 30 in more than one position) partition 68 is removed prior to loading one or more blade(s) 24 into fixture 28 and positioned within fixture 28 after one or more blade(s) 24 have been loaded into fixture 28.

In some embodiments, fixture frame 30 includes an identification plate 69 coupled thereto for identifying frame 30, one or more blade(s) 24 supported by frame 30, a position of one or more of cushions 32, cushions 33, and/or partition 68, and/or any other information relevant to fixture 28 and/or storage and/or transportation of one or more blade(s) 24.

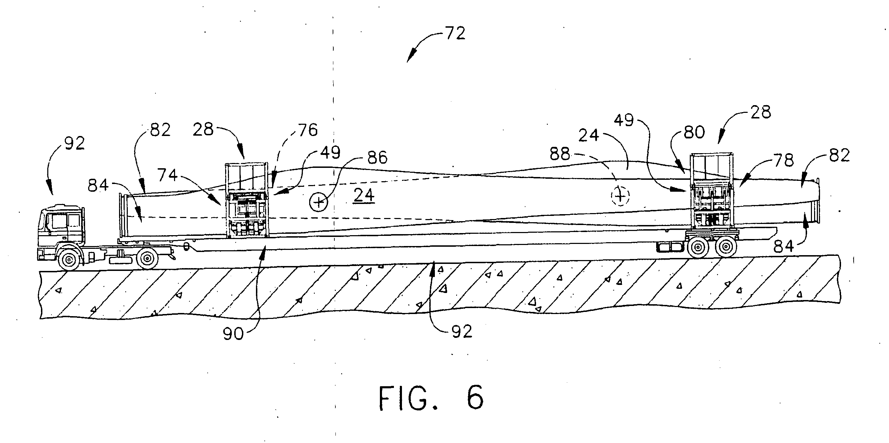

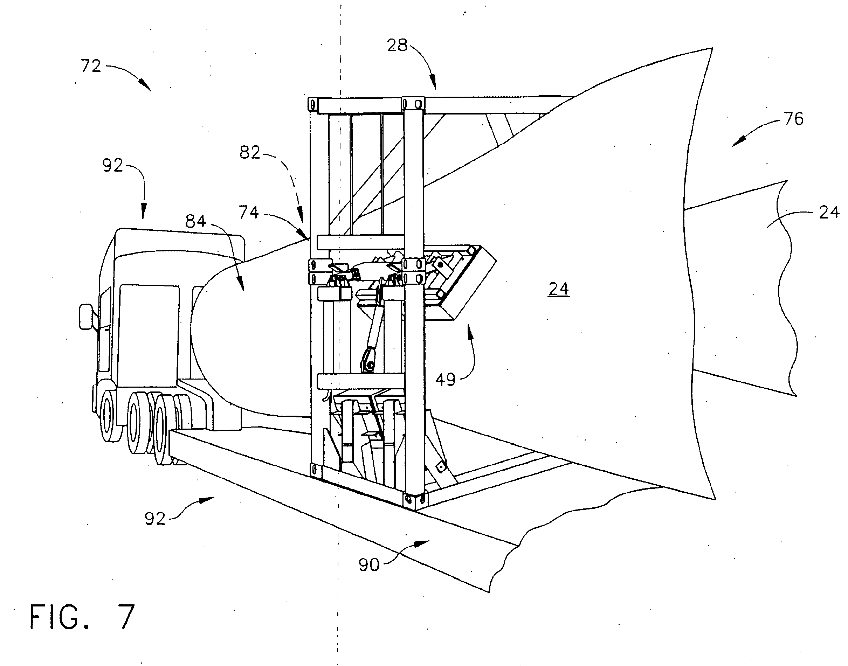

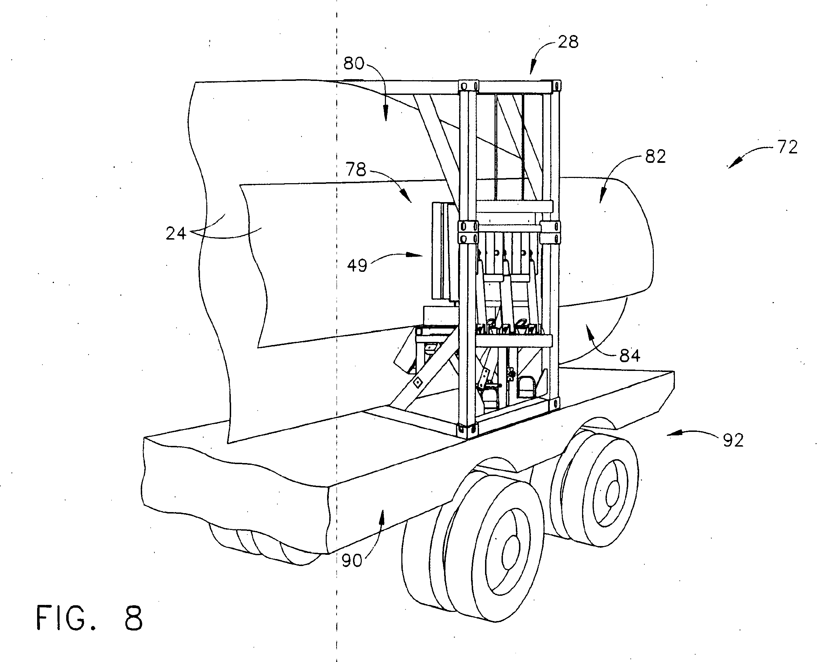

Figure 6 is a side view of an exemplary embodiment of a fixture assembly 72 including two wind turbine rotor blades 24 supported by two fixtures 28. Figure 7 is a perspective view of a portion of assembly 72. Figure 8 is a perspective of another portion of fixture assembly 72. As shown in Figures 6-8, a portion 74 and 76 of each of blades 24 is received within space 49 of one of fixtures 28, and a portion 78 and 80, respectively, of each blade 24 is received within space 49 of the other fixture 28. Although blades 24 may be positioned (such as, but not limited to, located and/or orientated), aligned, and/or arranged in any suitable position, alignment, and/or arrangement with respect to each other, fixtures 28, including any component thereof, and/or structures surrounding, supporting, and/or transporting assembly 72, including any component thereof, that enables fixtures 28 to function as described and/or illustrated herein, in the exemplary embodiment blades 24 are positioned, aligned, and/or arranged as shown in Figures 6-8. For example, in the exemplary embodiment shown in Figures 6-8, a tip portion 82 of each blade 24 is aligned with a root portion 84 of the other blade supported by fixture 28 and fixtures 28 are each located with respect to blades 24 such that a center of gravity 86 and 88 of each blade 24 is generally located between fixtures 28.

Although fixture assembly 72 is illustrated as supporting two wind turbine rotor blades 24, fixture assembly 72 may support any number of blades 24. Moreover, although fixture assembly 72 is illustrated as including two fixtures 28, fixture assembly may include any number of fixtures 72 for supporting blades 24. Furthermore, although upper section 34 is illustrated in Figures 6-8, in some embodiments upper section 34 may not used such that frame 30 only includes lower section 36. Once blades 24 are received within fixture spaces 49 and thereby supported by fixtures 28 and retained therein by the friction and/or stiction of cushions 32, cushions 33, partition 68, and/or any included non-movable cushions, fixture assembly 72 may, in some embodiments, be loaded onto a suitable means of transportation, such as, but not limited to, a ship, a truck bed, and/or a railcar, for transportation to a storage site and/or a site where blades 24 will be used. In the exemplary embodiment shown in Figures 6-8, fixture assembly 72 is loaded onto a truck bed 90 for transportation by a truck 92. Fixture assembly 72 may be coupled to the suitable means of transportation using any suitable method, structure, and/or means, such as, but not limited to ropes, chains, and/or twist-lock connectors.

Although fixture assembly 72 may have any weight, in some embodiments fixture assembly 72 has a weight that complies with restrictions on predetermined weighted loads. Such restrictions on predetermined weighted loads may include, but are not limited to, regional restriction, national restrictions, international restrictions, restrictions of transportation over land, restrictions of transportation over water, and/or restrictions of air transportation. For example, some known transport regulation within the United States restrict loads, including vehicle weight, to a weight of about 36.3 metric tons, some known Canadian transport regulations restrict loads, including vehicle weight, to a weight of about 36.3 metric tons, some known European transport regulations restrict loads, including vehicle weight, to a weight of between about 30.5 and about 50 metric tons, and some transport regulations within Asia restrict loads, including vehicle weight, to a weight of about 30 metric tons. Accordingly, in some embodiments fixture assembly 72 (whether including a weight of truck 92 or another vehicle) has a weight of between about 30 metric tons and about 50 metric tons.

The above-described and/or illustrated fixtures, assemblies, and methods are cost-effective and efficient for supporting and/or transporting rotor blades. More specifically, in some embodiments, the fixtures, assemblies, and methods support more than one blade while still being sized, shaped, and/or weighted to comply with at least some restrictions on predetermined sized, shaped, and/or weight loads. As such, the fixtures, assemblies, and methods may facilitate reducing a cost of transporting rotor blades as compared with at least some known transportation containers and/or methods that only transport one blade because they otherwise would not comply with at least some restrictions. Such size and/or shape that complies with at least some restrictions on predetermined sized and/or shaped loads may also facilitate transportation using more than one different mode of transportation.

The fixtures, assemblies, and methods described and/or illustrated herein may also facilitate reducing a cost of transporting rotor blades by providing one or more cushions that are adjustable to accommodate a plurality of differently sized and/or shaped rotor blades, such that dedicated fixtures of different sizes and/or shapes may not be required for differently sized and/or shaped rotor blades. Moreover, one or more cushions may facilitate reducing or eliminating vibrational stresses and/or other forces induced into one or more blades, for example during loading, unloading, and/or transportation. As such, the fixtures, assemblies, and methods described and/or illustrated herein may facilitate reducing or eliminating damage to blade(s), for example during loading, unloading, and/or transportation. One or more cushions may facilitate a secure coupling between one or more blades and a fixture to facilitate retaining the blade(s) within the fixture and in position during transportation and/or storage of the blade(s) using the fixture. As such, the fixtures, assemblies, and methods described and/or illustrated herein may facilitate reducing a complexity of coupling the blade(s) to the fixture, which may facilitate reducing a cost of transporting and/or storing the blade(s) and may facilitate reducing damage to the blade(s) during loading, unloading, and/or transportation thereof. Moreover, in some embodiments the fixtures described and/or illustrated herein are stackable, which may facilitate reducing a cost of transporting rotor blades because more rotor blades can be transported on the same transport means, and/or may facilitate transportation using more than one different mode. For example, stackability may facilitate transportation on a ship.

Although the fixtures, assemblies, and methods described and/or illustrated herein are described and/or illustrated with respect to rotor blades, and more specifically wind turbine rotor blades, practice of the fixtures, assemblies, and methods described and/or illustrated herein is not limited to wind turbine rotor blades, nor rotor blades. Rather, the fixtures, assemblies, and methods described and/or illustrated herein are applicable to transporting any load.

Exemplary embodiments of fixtures, assemblies, and methods are described and/or illustrated herein in detail. The fixtures, assemblies, and methods are not limited to the specific embodiments described herein, but rather, components of each fixture and each assembly, as well as steps of each method, may be utilized independently and separately from other components and steps described herein. Each component, and each method step, can also be used in combination with other components and/or method steps.

When introducing elements/components/etc. of the fixtures, assemblies, and methods described and/or illustrated herein, the articles "a", "an", "the", "said", and "at least one" are intended to mean that there are one or more of the element(s)/component(s)/etc. The terms "comprising", "including" and "having" are intended to be inclusive and mean that there may be additional element(s)/component(s)/etc. other than the listed element(s)/component(s)/etc.

### PARTS LIST

| | |
|---|---|
| 10 | wind turbine |
| 12 | wind generator |
| 14 | tower |
| 16 | body |
| 18 | rotor |
| 20 | axis of rotation |
| 22 | hub |
| 24 | blades |
| 26 | electrical generator |
| 28 | fixture |
| 30 | frame |
| 32 | cushions |
| 33 | cushions |
| 34 | upper section |
| 36 | lower section |
| 38 | legs |
| 40 | leg end portions |
| 41 | opening |
| 42 | openings |
| 43 | opening |
| 44 | leg end portions |
| 45 | maximum height |
| 46 | opening |
| 47 | maximum width |
| 48 | top portion |
| 49 | space |
| 50 | bottom portion |
| 51 | frame members |
| 52 | cushion surfaces |
| 53 | frame members |
| 54 | position |
| 55 | frame members |
| 56 | position |
| 57 | frame members |
| 58 | members |
| 59 | frame members |
| 60 | rod ends |
| 61 | frame members |
| 62 | u-joints |
| 63 | openings |
| 64 | joints |
| 65 | handle |
| 67 | identification plate |
| 68 | partition |
| 69 | identification plate |
| 70 | surface |
| 72 | fixture assembly |
| 74 | portion |
| 76 | portion |
| 78 | portion |
| 80 | portion |
| 82 | tip portion |
| 84 | root portion |
| 86 | center of gravity |
| 88 | gravity |
| 90 | truck bed |
| 92 | truck |

## Claims

1. A fixture (28) for at least one of supporting and transporting a load of at least two rotor blades, said fixture comprising:
a frame (30) having a space (49) defined between at least two portions (48,50) of said frame, said space configured to receive a portion of a first rotor blade and a portion of a second rotor blade;
a first member (58) hingedly coupled to said frame (30); and **characterized by**:
at least one first cushion (32) hingedly coupled to said first member (58) such that said at least one first cushion (32) is selectively positionable relative to said frame in at least two different positions wherein in a first position said at least one first cushion (32) is configured to facilitate at least one of containing and supporting the portion of the first rotor blade and the portion of the second rotor blade, and wherein in a second position said at least one first cushion (32) is configured to facilitate loading or unloading of the rotor blades from the fixture (28), said fixture (28) further comprising a second cushion (33) that is coupleable to said frame (30) in only one position and is non-movable relative to said frame (30) once coupled thereto.

2. A fixture (28) in accordance with Claim 1 wherein said cushions (32,33) are configured to facilitate reducing forces induced to the load.

3. A fixture (28) in accordance with Claim 1 or Claim 2 wherein said cushions (32,33) comprise respective surfaces (52) configured to facilitate increasing at least one of friction and stiction between the load and said surface.

4. A fixture (28) in accordance with any preceding Claim wherein said cushions (32,33) comprise at least one of a natural fiber, rubber, latex, polyurethane, and memory foam.

## Patentansprüche

1. Halterung (28) für wenigstens eines von Lagerung und Transport einer Last von wenigstens zwei Rotorblättern, wobei die Halterung aufweist:
einen Rahmen (30) mit einem zwischen wenigstens zwei Abschnitten (48, 50) des Rahmens definierten Raum (49), wobei der Raum dafür konfiguriert ist, einen Abschnitt eines ersten Rotorblattes und Abschnitt eines zweiten Rotorblattes aufzunehmen;
ein erstes Element (58), das gelenkig mit dem Rahmen (30) verbunden ist; und
**gekennzeichnet durch**:
wenigstens ein erstes Polster (32), das gelenkig mit dem ersten Element (58) so verbunden ist, dass das wenigstens eine erste Polster (32) in Bezug auf den Rahmen wählbar in wenigstens zwei verschiedenen Positionen positionierbar ist, wobei in einer ersten Position das wenigstens eine erste Polster (32) dafür konfiguriert ist, wenigstens eines von Aufnehmen und Lagern des Abschnittes des ersten Rotorblattes und des Abschnittes des zweiten Rotorblattes zu ermöglichen, und wobei in einer zweiten Position das wenigstens eine erste Polster (32) dafür konfiguriert ist, das Laden oder Entladen der Rotorblätter aus der Halterung (28) zu ermöglichen, wobei die Halterung (28) ferner ein zweites Polster (33) aufweist, das mit dem Rahmen (28) nur in einer Position verbunden werden kann und in Bezug auf den Rahmen nicht bewegt werden kann, sobald es damit verbunden ist.

2. Halterung (28) nach Anspruch 1, wobei die Polster (32, 33) dafür konfiguriert sind, eine Verringerung von in die Last eingeleiteten Kräften zu ermöglichen.

3. Halterung (28) nach Anspruch 1 oder Anspruch 2, wobei die Polster (32, 33) entsprechende Oberflächen (52) aufweisen, die dafür konfiguriert sind, wenigstens die Erhöhung von einem von Reibung und Anhaftung zwischen der Last und der Oberfläche zu ermöglichen.

4. Halterung (28) nach einem der vorstehenden Ansprüche, wobei die Polster (32, 33) wenigstens eines von Naturfaser, Gummi, Latex, Polyurethan und Formgedächtnisschaum aufweisen.

## Revendications

1. Châssis (28) pour supporter et/ou transporter une charge d'au moins deux pales de rotor, ledit châssis comprenant :
un cadre (30) comportant un espace (49) défini entre au moins deux parties (48, 50) dudit cadre, ledit espace étant configuré pour recevoir une partie d'une première pale de rotor et une partie d'une deuxième pale de rotor ;
un premier élément (58) couplé de manière articulée audit cadre (30) ; et **caractérisé par** :
au moins un premier tampon (32) couplé de manière articulée audit premier élément (58) de telle façon que ledit au moins un premier tampon (32) peut être positionné de façon sélective par rapport audit cadre dans au moins deux positions différentes, où dans une première position ledit au moins un premier tampon (32) est configuré pour faciliter la mise en place et/ou le support de la partie de la première pale de rotor et de la partie de la deuxième pale de rotor, et où dans une deuxième position, ledit au moins un premier tampon (32) est configuré pour faciliter le chargement ou le déchargement des pales de rotor du châssis (28), ledit châssis (28) comprenant en outre un deuxième tampon (33) qui peut être couplé audit cadre (30) dans une seule position et qui est immobile par rapport audit cadre (30) une fois couplé à celui-ci.

2. Châssis (28) selon la revendication 1, dans lequel lesdits tampons (32, 33) sont configurés pour faciliter la réduction des forces transmises à la charge.

3. Châssis (28) selon la revendication 1 ou 2, dans lequel lesdits tampons (32, 33) comprennent des surfaces respectives (52) configurées pour faciliter l'augmentation du frottement et/ou de la striction entre la charge et ladite surface.

4. Châssis (28) selon l'une quelconque des revendications précédentes, dans lequel lesdits tampons (32, 33) comprennent au moins un élément parmi une fibre naturelle, un caoutchouc, un latex, un polyuréthane et une mousse à mémoire de forme.
